# FASCICULE DE BREVET EUROPEEN

(11) **EP 0 908 373 B1**
(45) Date de publication et mention de la délivrance du brevet: **03.07.2002**
(21) Numéro de dépôt: 98402504.9
(22) Date de dépôt: 08.10.1998
(51) Int. Cl.: B62D 25/08

(54) **Dispositif de fixation d'une façade avant à la structure avant d'un véhicule automobile**
Vorrichtung zur Befestigung einer Vorderfront an einem Vorderbau eines Kraftfahrzeuges
Means for fixing a front façade to the forward structure of a motor vehicle

(30) Priorité: 09.10.1997 FR 9712615
(43) Date de publication de la demande: 14.04.1999
(73) Titulaire: AUTOMOBILES PEUGEOT, 75116 Paris (FR); AUTOMOBILES CITROEN, 92200 Neuilly-sur-Seine (FR)
(72) Inventeur: Ory, Patrick, 78200 Mantes la Ville (FR)
(74) Mandataire: Thinat, Michel

(56) Documents cités:
- EP-A- 0 679 565
- WO-A-82/00808
- FR-A- 2 646 823
- US-A- 4 287 961
- US-A- 5 271 473

## Description

La présente invention concerne un dispositif de fixation d'une façade avant à la structure avant d'un véhicule automobile.

On connaît par le document FR-A-2 646 823, qui sert de base pour la présentation en deux parties de la revendication une structure avant d'un véhicule automobile formant un ensemble mécanique comprenant le moteur, son berceau, les liaisons au sol, la transmission, la direction et deux brancards parallèles associés au berceau.

Selon cette structure connue, un cadre formant la façade avant comprenant notamment un radiateur vertical, un groupe moto-ventilateur, un condenseur, est fixé de façon détachable aux extrémités avant des brancards de manière à permettre l'extraction du groupe moto-propulseur par l'avant du véhicule.

Cependant, cette structure connue a pour inconvénient majeur que l'ensemble constituant la façade avant est lourd de sorte qu'il est nécessaire de prévoir au moins deux personnes pour le démontage de la façade avant et la dépose de cette façade sur un moyen de transport roulant, tel qu'un chariot.

L'invention consiste à resoudre ces problèmes en proposant un dispositif de fixation d'une façade avant à la structure avant d'un véhicule automobile selon la revendication 1.

De préférence, l'articulation comprend deux axes coaxiaux verticalement espacés, dirigés vers le bas, solidaires de la façade avant et s'engageant respectivement dans deux trous réalisés dans la structure avant.

Le dispositif comprend également des moyens de fixation, à sa position fermée, de la façade avant à la structure avant du véhicule.

De préférence, les deux tenons sont solidaires respectivement de deux pattes supérieure et inférieure perpendiculaires au côté latéral correspondant de la façade avant et les deux ouvertures de réception des tenons sont réalisées respectivement dans deux pattes supérieure et inférieure transversales de la face latérale correspondante de la paroi frontale délimitant avec l'autre face latérale opposée le passage précité.

Les moyens de fixation de la façade avant à la structure comprennent deux boulons, l'un solidarisant la patte supérieure de la façade avant à la patte supérieure sous-jacente de la paroi frontale et l'autre solidarisant une patte supérieure solidaire de l'autre côté de la façade avant perpendiculairement à celui-ci à une patte supérieure transversale sous-jacente de la paroi frontale.

Les deux axes d'articulation de la façade avant sont solidaires respectivement de la patte supérieure et d'une patte inférieure parallèle de la façade avant, et les deux trous de réception des deux axes d'articulation sont réalisés respectivement dans la patte supérieure de la paroi frontale et une patte inférieure transversale de cette paroi.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
La figure 1 est une vue en perspective de la structure avant d'un véhicule automobile à laquelle est fixée, selon l'invention, la façade avant occupant sa position fermée.
La figure 2 est une vue semblable à celle de la figure 1 où la façade avant occupe une position d'ouverture du passage définie dans la paroi frontale de la structure avant.
La figure 3 est une vue en perspective agrandie de la façade avant en position montée sur la structure du véhicule.
La figure 4 est une vue agrandie en perspective de la partie cerclée en IV de la figure 3.
La figure 5 est une vue en perspective agrandie de la partie cerclée en V de la figure 3.
La figure 6 est une vue en section suivant la ligne VI-VI de la figure 4.
La figure 7 est une vue en section suivant la ligne VII-VII de la figure 3.
La figure 8 est une vue en section suivant la ligne VIII-VIII de la figure 3.
La figure 9 est une vue en section suivant la ligne IX-IX de la figure 3.

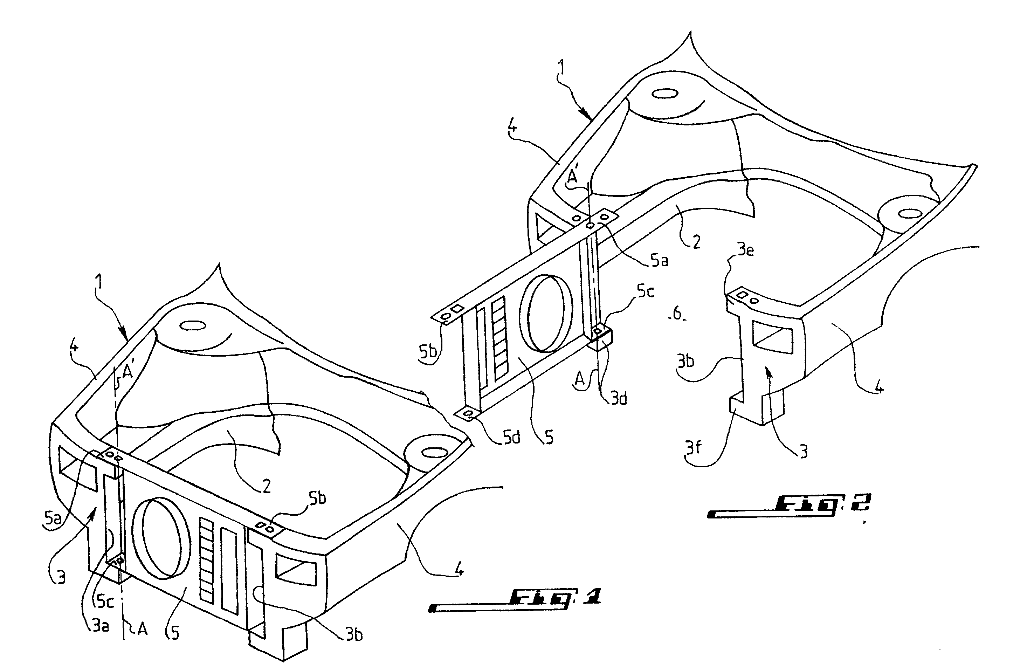

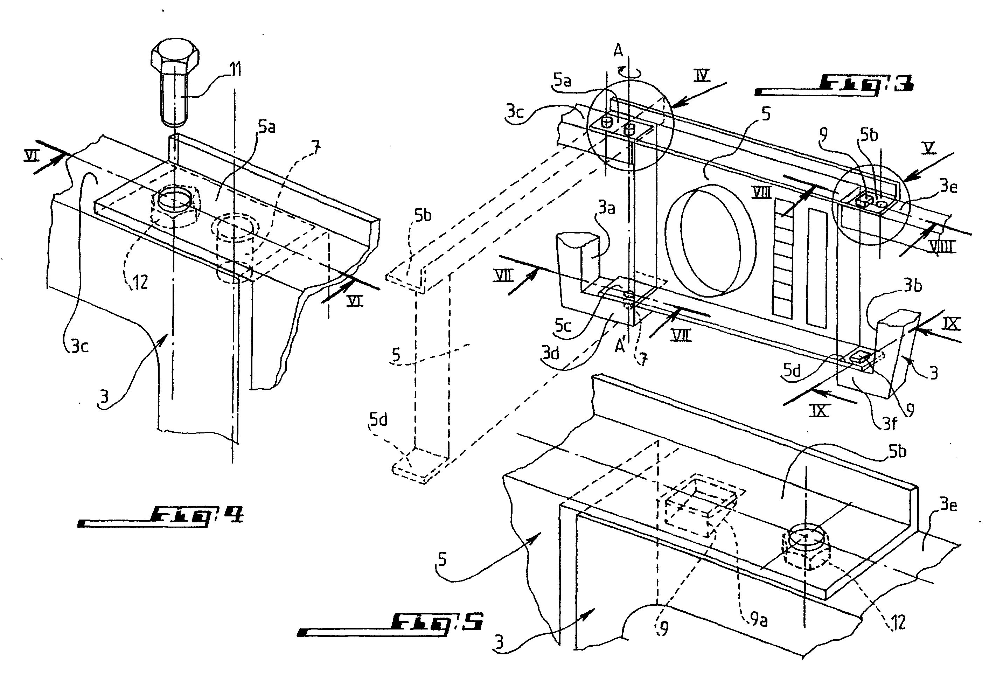

En se reportant tout d'abord aux figures 1 et 2, la référence 1 désigne une structure avant d'un véhicule automobile comprenant deux brancards sensiblement parallèles 2, dont un seul est visible, associés à un berceau (non représenté) destiné à recevoir notamment un groupe moto-propulseur également non représenté.

La structure avant comprend également une paroi frontale verticale 3 fixée aux extrémités des deux brancards 2 et prolongeant les deux extrémités avant des parois latérales 4 de la structure 1.

Une façade avant 5 supportant notamment un radiateur vertical, un groupe moto-ventilateur et le condenseur, est fixée à la structure.

Selon l'invention, la façade avant 5 est fixée à la structure 1 de manière à pouvoir pivoter autour d'une articulation verticale A-A' d'un côté de celle-ci d'une position d'ouverture (figure 2) d'un passage transversal et vertical 6 définit dans la paroi frontale 3 à une position de fermeture de ce passage (figure 1) à laquelle la façade est amoviblement fixée à la structure 1.

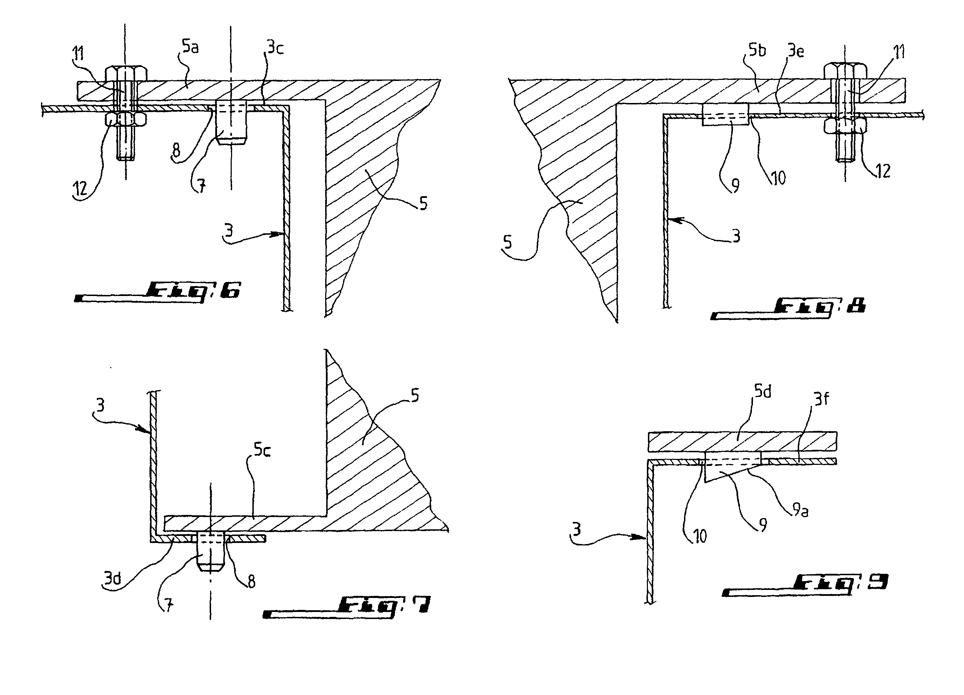

A cet effet, comme cela est mieux représenté aux figures 3 à 9, la façade avant 5, en forme générale de parallépipède rectangle, comprend de chaque côté de celle-ci deux pattes supérieures 5a, 5b et inférieures 5c, 5d perpendiculaires à leurs côtés respectifs de la façade 5 en faisant saillie de ceux-ci.

L'articulation verticale A-A' de la façade avant 5 comprend deux axes cylindriques coaxiaux 7, l'un solidaire de la face inférieure de la patte 5a et l'autre solidaire de la face inférieure de la patte 5c, c'est-à-dire que les axes cylindriques 7 sont orientés dans le même sens, vers le bas en position de montage de la façade avant 5. Les deux axes 7 s'engagent respectivement dans deux trous ou perçages coaxiaux verticaux 8 réalisés dans la paroi frontale 3 au niveau d'une face latérale verticale correspondante 3a de la paroi définissant, avec la face latérale opposée 3b le passage 6. Plus précisément, le perçage supérieur 8 est réalisé à travers une patte supérieure transversale 3c faisant saillie de la face latérale 3a perpendiculairement à celle-ci sur laquelle vient en appui la patte supérieure 5a de la façade 5, tandis que le perçage inférieur 8 est réalisé à travers une patte transversale inférieure 3d faisant saillie sur la face latérale 3a perpendiculairement à celle-ci et sur laquelle vient en appui la patte inférieure 5c de la façade 5.

Des moyens sont également prévus pour maintenir amoviblement, par encliquetage, la façade avant à sa position de fermeture du passage 6.

Ces moyens comprennent, deux tenons supérieur et inférieur 9 solidaires respectivement des deux pattes supérieure 5b et inférieure 5d de la façade 5 sous celles-ci, donc à l'opposé de l'articulation A-A', et pouvant s'engager élastiquement à force lors de la fermeture de la façade 5 respectivement dans deux ouvertures 10 réalisées l'une dans une patte transversale supérieure 3e faisant saillie de la face latérale 3b perpendiculairement à celle-ci, l'autre dans une patte inférieure transversale 3f faisant également saillie de la face 3b perpendiculairement à celle-ci. Comme cela ressort mieux des figures 5, 8 et 9, chaque tenon 9 est en forme d'onglet prismatique dont la paroi oblique 9a est orientée de manière à faciliter le passage, par déformation élastique des deux pattes 5b, 5d, des tenons 9 sur les pattes correspondantes 3e, 3f jusqu'à leur réception dans les deux ouvertures 10. En position engagée des tenons 9 dans leurs ouvertures respectives 10, la face avant d'extrémité de plus grande hauteur de chaque tenon empêche l'ouverture de la façade avant en venant en butée contre le bord correspondant de l'ouverture 10.

Pour fixer complètement la façade avant 5 à la paroi 3, on prévoit deux boulons de fixation des deux pattes supérieures 5a et 5b de la façade 5 sur les deux pattes supérieures 3c et 3e de la paroi 3. Chaque boulon comprend un vis 11 traversant la patte correspondante 5a, 5b de la façade 5 et s'engageant dans un écrou de blocage 12 solidaire, par soudage, de la face inférieure de la patte supérieure correspondante 3c, 3e de la paroi 3.

Lorsque la façade avant 5 est réalisée à base de matière plastique, les axes 7 et les tenons 9 sont intégrés par moulage de la façade 5 et lorsque cette dernière est en métal, les axes 7 et les tenons 9 sont fixés aux pattes correspondantes par soudage.

Le montage de la façade avant 5 s'effectue en introduisant les axes d'articulation 7 dans les perçages correspondants 8 à la position d'ouverture de la façade de sorte que celle-ci peut alors librement pivoter autour de l'axe vertical A-A'. Avant d'amener la façade 5 à sa position de fermeture du passage 6, l'opérateur peut accéder librement au groupe moto-propulseur pour effectuer des opérations particulières telles que par exemple des branchements de fils ou de tubes au groupe motopropulseur. Une fois ces opérations terminées, l'opérateur fait pivoter la façade 5 pour l'amener à sa position de fermeture jusqu'à ce que les deux tenons 9 arrivent en butée sur les faces correspondantes de la paroi frontale 3. En exerçant sur la façade 5 un effort de poussée prédéterminé, on provoque la déformation élastique des pattes 5b, 5d de la façade 5 sur les pattes 3e et 3f et les tenons 9 s'engagent à force, par encliquetage, dans les ouvertures correspondantes 10 pour verrouiller la façade avant à la paroi frontale 3 de la structure 1. Ensuite, l'opérateur bloque la façade 5 à la position fermée en vissant les vis 11 dans les écrous respectifs 12.

Lorsqu'un opérateur souhaite accéder notamment au groupe moto-propulseur pour effectuer des réparations ou un démontage particulier, il dévisse les vis 11 puis, à l'aide d'un outil, il écarte élastiquement les pattes 5b, 5d de la façade 5 pour désengager les tenons 9 de leurs ouvertures 10 et fait pivoter la façade 5 dans le sens d'ouverture de celle-ci pour lui permettre alors d'accéder facilement au compartiment du groupe moto-propulseur.

Le dispositif de l'invention permet ainsi d'accéder, à tout moment, au groupe moto-propulseur d'un véhicule automobile pour effectuer des réparations ou un démontage de pièces défectueuses sans nécessiter notamment l'ouverture du liquide caloporteur du système de refroidissement du véhicule. De plus, le montage et le démontage de la façade avant sont extrêmement simples et ne nécessitent en tout cas pas d'opérations complexes et utilisent peu de pièces.

## Revendications

1. Dispositif de fixation d'une façade avant (5) à la structure avant (1) d'un véhicule automobile, comprenant une articulation (A-A') reliant un côté de la façade avant (5) à la structure avant (1) permettant le pivotement de la façade avant (5) d'une position extérieure d'ouverture d'un passage frontal transversal (6) de la structure avant (1) pour faciliter l'accès au moteur du véhicule à une position de fermeture du passage **caractérisé en ce que** ladite articulation est verticale; **en ce qu'**il comprend des moyens (9) de maintien détachables, par encliquetage, de la façade avant (5) à sa position de fermeture, et **en ce que** les moyens de maintien comprennent deux tenons (9) en forme d'onglet prismatique solidaires de la façade avant (5) au côté opposé à l'articulation (A-A') en étant verticalement disposés l'un au-dessus de l'autre et s'engageant élastiquement à force lors de la fermeture de la façade avant (5) respectivement dans deux ouvertures (10) réalisées dans la structure avant (1).

2. Dispositif selon la revendication 1, **caractérisé en ce que** l'articulation (A-A') précitée comprend deux axes coaxiaux verticalement espacés (7), dirigés vers le bas, solidaires de la façade avant (5) et s'engageant respectivement dans deux trous (8) réalisés dans la structure avant (1).

3. Dispositif selon la revendication 1 ou 2, **caractérisé en ce qu'**il comprend des moyens de fixation (11, 12), à sa position fermée, de la façade avant (5) à la structure avant (1).

4. Dispositif selon la revendication 2, **caractérisé en ce que** les deux tenons (9) sont solidaires respectivement de deux pattes supérieure (5b) et inférieure (5d) perpendiculaires au côté correspondant de la façade avant (5) et les deux ouvertures de réception (10) des tenons (9) sont réalisées respectivement dans deux pattes transversales supérieure (3e) et inférieure (3f) de la face latérale correspondante (3b) de la paroi frontale (3) délimitant avec l'autre face latérale opposée (3a) le passage (6) précité.

5. Dispositif selon les revendications 3 et 4, **caractérisé en ce que** les moyens de fixation comprennent deux boulons (11, 12), l'un solidarisant la patte supérieure (5b) de la façade avant (5) à la patte supérieure sous-jacente (3e) de la paroi (3) et l'autre solidarisant une patte supérieure (5a), solidaire de l'autre côté de la façade avant (5) perpendiculairement à celui-ci, à une patte supérieure transversale sous-jacente (3c) de la paroi (3).

6. Dispositif selon la revendication 5, **caractérisé en ce que** les deux axes d'articulation (7) de la façade avant (5) sont solidaires respectivement de la patte supérieure (5a) et d'une patte inférieure parallèle (5c) de la façade avant (5) et les deux trous de réception (8) des deux axes (7) sont réalisés respectivement dans la patte supérieure (3c) de la paroi (3) et une patte inférieure transversale (3d) de cette paroi.

## Patentansprüche

1. Befestigungsvorrichtung einer Vorderfront (5) an der vorderen Struktur (1) eines Kraftfahrzeugs, **dadurch gekennzeichnet, dass** es eine vertikale Artikulation (A-A') umfasst, die eine Seite der Vorderfront (5) mit der vorderen Struktur (1) verbindet, was das Schwenken der Vorderfront (5) von einer äußeren Öffnungsposition eines frontalen Querdurchgangs (6) der vorderen Struktur (1) erlaubt, um den Zugang zum Motor des Fahrzeugs zu erlauben, in eine geschlossene Position des Durchgangs und abnehmbare Mittel (9) zum Festhalten durch Einklicken der Vorderfront (5) in ihrer geschlossenen Position, und dass die Festhaltemittel zwei Zapfen (9) in prismaförmiger Kegelform umfassen, die mit der Vorderfront (5) auf der der Artikulation (A-A') gegenüberliegenden Seite fest verbunden sind und dabei übereinander vertikal angeordnet sind und beim Schließen der Vorderfront (5) unter Krafteinwirkung elastisch jeweils in zwei in der vorderen Struktur (1) realisierte Öffnungen (10) eingreifen.

2. Vorrichtung gemäß Anspruch 1, **dadurch gekennzeichnet, dass** die vorgenannte Artikulation (A-A') zwei koaxiale, vertikal entfernte, nach unten gerichtete Achsen (7) umfasst, die mit der Vorderfront (5) fest verbunden sind und jeweils in zwei in der vorderen Struktur (1) realisierte Löcher (8) eingreifen.

3. Vorrichtung gemäß Anspruch 1 oder 2, **dadurch gekennzeichnet, dass** sie in ihrer geschlossenen Position Befestigungsmittel (11, 12) der Vorderfront (5) an der vorderen Struktur (1) umfasst.

4. Vorrichtung gemäß Anspruch 2, **dadurch gekennzeichnet, dass** die zwei Zapfen (9) jeweils mit zwei oberen (5b) und unteren (5d), auf der der Vorderfront (5) entsprechenden Seite senkrechten Klauen fest verbunden sind, und die zwei Aufnahmeöffnungen (10) der Zapfen (9) jeweils in zwei querverlaufenden - einer oberen (3e) und einer unteren (3f) - Klauen der entsprechenden Seitenfront (3b) der Vorderfront (3) realisiert sind, die mit der anderen gegenüber liegenden Seitenfront (3a) den vorgenannten Durchgang (6) begrenzt.

5. Vorrichtung gemäß Anspruch 3 und 4, **dadurch gekennzeichnet, dass** die Befestigungsmittel zwei Bolzen (11, 12) umfassen, von denen einer die obere Klaue (5b) der Vorderfront (5) mit der oberen, darunter liegenden (3e) Klaue der Wand (3) fest verbindet, und die andere eine obere Klaue (5a) fest verbindet, die mit der anderen Seite der zu derselben senkrechten Vorderfront (5) mit einer oberen, querverlaufenden, darunter liegenden (3c) Klaue der Wand (3) fest verbunden ist.

6. Vorrichtung gemäß Anspruch 5, **dadurch gekennzeichnet, dass** die zwei Artikulationsachsen (7) der Vorderfront (5) jeweils mit der oberen (5a) Klaue und einer unteren parallelen (5c) Klaue der Vorderfront (5) fest verbunden sind und die zwei Aufnahmelöcher (8) der zwei Achsen (7) jeweils in der oberen (3c) Klaue der Wand (3) und einer unteren querverlaufenden (3d) Klaue dieser Wand realisiert sind.

## Claims

1. Device for fixing a front facade (5) to the front structure (1) of a motor vehicle, **characterised in that** it includes a vertical joint (A-A') connecting one side of the front facade (5) to the front structure (1) so as to allow the pivoting of the front facade (5) from an external position for opening a transversal frontal passage (6) of the front structure (1) so as to facilitate access to the motor of the vehicle to a position for closing the passage, and detachable support means for snapping the front facade (5) in its closing position, and **in that** the support means include two prismatic thumb-nail-shaped tenons (9) integral with the front facade (5) on the side opposite the joint (A-A') with one being vertically placed above the other and forcefully elastically being engaged during closing of the front facade (5) respectively in two openings (10) made in the front structure (1).

2. Device according to claim 1, **characterised in that** said joint (A-A') includes two vertically spaced coaxial spindles (7) directed downwards, integral with the front facade (5) and being respectively engaged in two holes (8) made in the front structure (1).

3. Device according to claim 1 or 2, **characterised in that** it includes means (11, 12) for fixing in its closed position the front facade (5) to the front structure (1).

4. Device according to claim 2, **characterised in that** the two tenons (9) are respectively integral with two upper (5b) and lower (5d) brackets perpendicular to the corresponding side of the front facade (5) and the two openings (10) for receiving the tenons (9) are respectively embodied in two transversal upper (3e) and lower (3f) brackets of the corresponding lateral face (3b) of the frontal wall (3) delimiting with the other opposing lateral face (3a) said passage (6).

5. Device according to claims 3 and 4, **characterised in that** the fixing means include two bolts (11, 12), one rendering integral the upper bracket (5b) of the front facade (5) with the subjacent upper bracket (3e) of the wall (3) and the other rendering integral one upper bracket (5a) integral with the other side of the front facade (5) perpendicular to the latter with a subjacent transversal bracket (3c) of the wall (3).

6. Device according to claim 5, **characterised in that** the two hinge pins (7) of the front facade (5) are respectively integral with the upper bracket (5a) and a parallel lower bracket (5c) of the front facade (5) and the two receiving holes (8) of the two spindles (7) are respectively embodied in the upper bracket (3c) of the wall (3) and a transversal lower bracket (3d) of this wall.
